# NEUE EUROPÄISCHE PATENTSCHRIFT

(11) **EP 1 862 688 B2**
(45) Veröffentlichungstag und Bekanntmachung des Hinweises auf die Entscheidung über den Einspruch: **08.08.2018**
(45) Hinweis auf die Patenterteilung: 27.07.2011
(21) Anmeldenummer: 07009901.5
(22) Anmeldetag: 18.05.2007
(51) Int. Cl.: F16D 21/06

(54) **Drehmomentübertragungsanordnung für den Antriebsstrang eines Fahrzeugs**
Torque transmission assembly for the power transmission of a vehicle
Agencement de transmission d'un couple de rotation pour le conducteur de commande d'un véhicule

(30) Priorität: 01.06.2006 DE 102006025529
(43) Veröffentlichungstag der Anmeldung: 05.12.2007
(73) Patentinhaber: ZF Friedrichshafen AG, 88046 Friedrichshafen (DE)
(72) Erfinder: Peterseim, Michael, 97493 Bergrheinfeld (DE); Vogt, Sebastian, 97616 Bad Neustadt (DE)
(74) Vertreter: 2SPL Patentanwälte PartG mbB

(56) Entgegenhaltungen:
- EP-A2- 1 134 447
- EP-A2- 1 361 102
- DE-A1- 2 924 234
- DE-A1- 3 023 294
- DE-A1- 3 037 990
- DE-A1- 10 012 807
- DE-A1- 10 012 808
- DE-A1- 10 044 493
- DE-A1-102005 037 514
- FR-A1- 2 814 516
- FR-A1- 2 814 516
- FR-B1- 2 807 481
- FR-E- 88 126
- US-A- 3 842 954
- US-A- 4 317 435
- US-A- 4 518 070

## Beschreibung

Die vorliegende Erfindung betrifft eine Drehmomentübertragungsanordnung für den Antriebsstrang eines Fahrzeugs, umfassend eine Doppelkupplungsanordnung mit einer zentralen Widerlagerplatte, welche an ein Antriebsorgan angekoppelt oder anzukoppeln ist, und an beiden axialen Seiten der Widerlagerplatte jeweils eine Druckplattenbaugruppe, wobei jede Druckplattenbaugruppe ein an der Widerlagerplatte festgelegtes oder festzulegendes Gehäuse, eine bezüglich des Gehäuses im Wesentlichen drehfest und axial bewegbar gehaltene Anpressplatte sowie eine bezüglich der Anpressplatte und des Gehäuses abgestützte Kraftbeaufschlagungsanordnung umfasst, ferner umfassend in Zuordnung zu jeder Druckplattenbaugruppe eine an ein Abtriebsorgan angekoppelte oder anzukoppelnde Kupplungsscheibe, welche bei Beaufschlagung der Anspressplatte durch die Kraftbeaufschlagungsanordnung gegen die Widerlagerplatte pressbar ist, wobei die Abtriebsorgane zwei koaxial zueinander angeordnete Abtriebswellen umfassen und wobei in der koaxial inneren Abtriebswelle ein stangenartiges Betätigungsorgan angeordnet ist, über welches eine Betätigungskraft auf die Kraftbeaufschlagungsanordnung derjenigen Druckplattenbaugruppe übertragbar ist, deren zugeordnete Kupplungsscheibe mit der koaxial inneren Abtriebswelle gekoppelt oder zu koppeln ist, wobei das stangenartige Betätigungsorgan an seinem von der Zusammenwirkung mit der Kraftbeaufschlagungsanordnung entfernt liegenden Betätigungsende zur Einleitung einer Betätigungskraft mit einem Betätigungssystem zusammenwirkt.

Eine derartige Drehmomentübertragungsanordnung ist aus der DE 100 12 808 A1 bekannt. Die beiden beidseits einer zentralen Widerlagerplatte angeordneten Kupplungsbereiche der Doppelkupplungsanordnung dieser bekannten Drehmomentübertragungsanordnung sind über jeweils diesen zugeordnete Betätigungssysteme zu betätigen. Dabei ist für den an der vom Getriebe abgewandten Seite der Doppelkupplungsanordnung liegenden Kupplungsbereich in der koaxial inneren Abtriebswelle bzw. Getriebeeingangswelle ein stangenartiges Betätigungselement verschiebbar angeordnet, das über ein tellerartiges Übertragungselement auf die im Wesentlichen als Tellerfeder ausgestaltete Kraftbeaufschlagungsanordnung einwirkt. Die Kraftbeaufschlagungsanordnung bzw. die Tellerfeder ist so gestaltet, dass sie unter Vorspannung zwischen der Anpressplatte und dem Gehäuse eingebaut ist und die Anpressplatte in Richtung auf die zentrale Widerlagerplatte zu bewegt. Das heißt, zum Durchführen von Auskuppelvorgängen muss die Kraftbeaufschlagungsanordnung in ihrem radial inneren Bereich in Richtung von der zentralen Widerlagerplatte weg beaufschlagt werden, wozu das tellerartige Übertragungselement von dem in der koaxial inneren Abtriebswelle verschiebbaren stangenartigen Betätigungselement in der entsprechenden Richtung gedrückt wird.

Es ist die Aufgabe der vorliegenden Erfindung, ein gattungsgemäßes Drehmomentübertragungssystem so weiter zu gestalten, dass bei einfachem Aufbau eine hohe Betriebssicherheit erlangt werden kann.

Erfindungsgemäß wird diese Aufgabe gelöst durch die Merkmale des Anspruchs 1, das heißt unter anderem durch eine Drehmomentübertragungsanordnung für den Antriebsstrang eines Fahrzeugs, umfassend eine Doppelkupplungsanordnung mit einer zentralen Widerlagerplatte, welche an ein Antriebsorgan angekoppelt oder anzukoppeln ist, und an beiden axialen Seiten der Widerlagerplatte jeweils eine Druckplattenbaugruppe, wobei jede Druckplattenbaugruppe ein an der Widerlagerplatte festgelegtes oder festzulegendes Gehäuse, eine bezüglich des Gehäuses im Wesentlichen drehfest und axial bewegbar gehaltene Anpressplatte sowie eine bezüglich der Anpressplatte und des Gehäuses abgestützte Kraftbeaufschlagungsanordnung umfasst, ferner umfassend in Zuordnung zu jeder Druckplattenbaugruppe eine an ein Abtriebsorgan angekoppelte oder anzukoppelnde Kupplungsscheibe, welche bei Beaufschlagung der Anspressplatte durch die Kraftbeaufschlagungsanordnung gegen die Widerlagerplatte pressbar ist, wobei die Abtriebsorgane zwei koaxial zueinander angeordnete Abtriebswellen umfassen und wobei in der koaxial inneren Abtriebswelle ein stangenartiges Betätigungsorgan angeordnet ist, über welches eine Betätigungskraft auf die Kraftbeaufschlagungsanordnung derjenigen Druckplattenbaugruppe übertragbar ist, deren zugeordnete Kupplungsscheibe mit der koaxial inneren Abtriebswelle gekoppelt oder zu koppeln ist, wobei das stangenartige Betätigungsorgan an seinem von der Zusammenwirkung mit der Kraftbeaufschlagungsanordnung entfernt liegenden Betätigungsende zur Einleitung einer Betätigungskraft mit einem Betätigungssystem zusammenwirkt.

Dabei ist weiter vorgesehen, dass das stangenartige Betätigungsorgan bei Übertragung einer Betätigungskraft vom Betätigungssystem zu der Kraftbeaufschlagungsanordnung einer Zugbelastung unterliegt.

Bei dem erfindungsgemäßen Drehmomentübertragungssystem überträgt also das stangenartige Betätigungsorgan im Gegensatz zum Stand der Technik eine Zugkraft, was in vielen Belangen vorteilhaft ist. Zunächst besteht bei einer Zugbelastung des stangenartigen Betätigungselements nicht die Gefahr, dass dieses bei übermäßiger Belastung durch Ausweichbewegungen bzw. Abknicken beschädigt wird, was insbesondere von Vorteil ist, wenn eine derartige Drehmomentübertragungsanordnung zur Übertragung großer Drehmomente ausgestaltet sein soll, wie dies beispielsweise bei Nutzfahrzeugen der Fall ist. Entsprechend den großen zu übertragenden Drehmomenten sind hierbei auch vergleichsweise große Betätigungskräfte erforderlich. Aufgrund der Tatsache, dass die Gefahr einer Überlastung des stangenartigen Betätigungselements praktisch ausgeschlossen ist, kann dieses auch deutlich dünner gestaltet werden, was wiederum Vorteile bei der Ausgestaltung der koaxial inneren Abtriebswelle mit sich bringt. Weiterhin wird es möglich, durch Übertragen einer Zugbelastung auch denjenigen Kupplungsbereich der Doppelkupplungsanordnung, welcher über das stangenartige Betätigungselement zu betätigen ist, in einfacher Art und Weise als so genannte Normal-Offen-Kupplung auszugestalten. Dies wiederum ist vorteilhaft, da auf diese Art und Weise bei einer Doppelkupplungsanordnung die Gefahr vermieden werden kann, dass bei Auftreten eines Defekts in den Betätigungssystemen beide Kupplungsbereiche gleichzeitig in einen Einrückzustand gelangen.

Vor allem in Verbindung mit einer derartigen Normal-Offen-Kupplung ist das Übertragen einer Zugbelastung über das stangenartige Betätigungselement vorteilhaft, da bei derartigen Kupplungen im Prinzip während des gesamten Einkuppelzustands eine Betätigungskraft zu übertragen ist und somit eine Entlastung des stangenartigen Betätigungselements durch Einsatz einer Zugbelastung vorteilhaft ist, während bei so genannten Normal-Geschlossen-Kupplungen lediglich während Durchführung eines Auskuppelvorgangs oder eines Einkuppelvorgangs eine Betätigungskraft zu übertragen ist, also das stangenartige Betätigungselement vergleichsweise kurz belastet ist.

Beispielsweise kann vorgesehen sein, dass das Betätigungssystem die Betätigungskraft am Betätigungsende über ein Drehentkopplungslager in das stangenartige Betätigungsorgan einleitet. Alternativ kann die Drehentkopplung auch dadurch realisiert werden, dass im Betätigungskraftübertragungsweg zwischen dem stangenartigen Betätigungsorgan und der Kraftbeaufschlagungsanordnung ein Drehentkopplungslager angeordnet ist.

Bei einem sehr einfach zu realisierenden System wird vorgeschlagen, dass das Betätigungssystem einen Betätigungshebel umfasst, der in einem ersten Abstützbereich bezüglich einer im Wesentlichen feststehenden Baugruppe abgestützt ist und in einem zweiten Abstützbereich eine Betätigungskraft in das stangenartige Betätigungsorgan einleitet. Alternativ ist es jedoch auch möglich, dass das Betätigungssystem eine das stangenartige Betätigungsorgan im Wesentlichen koaxial umgebende Kolben/Zylinder-Baugruppe umfasst, die bezüglich einer im Wesentlichen feststehenden Baugruppe abgestützt ist und zur Einleitung einer Betätigungskraft das stangenartige Betätigungselement beaufschlagt. Um für die Doppelkupplungsanordnung eine definierte Positionierung vorgeben zu können und somit das Auftreten von Taumelbewegungen minimieren zu können, wird vorgeschlagen, dass die zentrale Widerlagerplatte einen radial innen liegenden Lagerungsbereich aufweist, in welchem diese bezüglich der koaxial äußeren Welle gelagert ist.

Weiterhin ist es vorteilhaft, wenn die zentrale Widerlagerplatte mit ihrem Lagerungsbereich bezüglich der koaxial äußeren Welle axial im Wesentlichen feststehend gehaltert ist. Auf diese Art und Weise wird auch eine definierte axiale Positionierung für die Doppelkupplungsanordnung vorgesehen und es kann dafür gesorgt werden, dass Betätigungskräfte innerhalb des Betätigungssystems bzw. der Doppelkupplungsanordnung selbst abgestützt werden und nicht beispielsweise auf die Lager einer Kurbelwelle eines Antriebsaggregats übertragen werden.

Weiter kannes vorgesehen sein, dass die an den beiden Seiten der zentralen Widerlagerplatte vorgesehenen Druckplattenbaugruppen zueinander im Wesentlichen baugleich sind.

Durch den Einsatz zweier baugleicher bzw. im Wesentlichen identischer Druckplattenbaugruppen für die Doppelkupplungsanordnung kann die Teilevielzahl gemindert werden, das zu deutlich gesenkten Herstellungskosten führt. Weiterhin wird dadurch erreicht, dass beide Druckplattenbaugruppen im Wesentlichen gleiche Funktionalitäten und Kräfteverhältnisse bereitstellen, was hinsichtlich der Charakteristik der durchzuführenden Betätigungsvorgänge von Vorteil ist.

Die vorliegende Erfindung wird nachfolgend mit Bezug auf die beiliegenden Zeichnungen beschrieben. Es zeigt:
- Fig. 1: eine Längsschnittansicht eines erfindungsgemäßen Antriebssys- tems;
- Fig. 2: eine Detailansicht der Zusammenwirkung eines stangenartigen Betätigungselements mit einem Betätigungssystem;
- Fig. 3: eine der Fig. 2 entsprechende Ansicht einer alternativen Ausge- staltungsform.

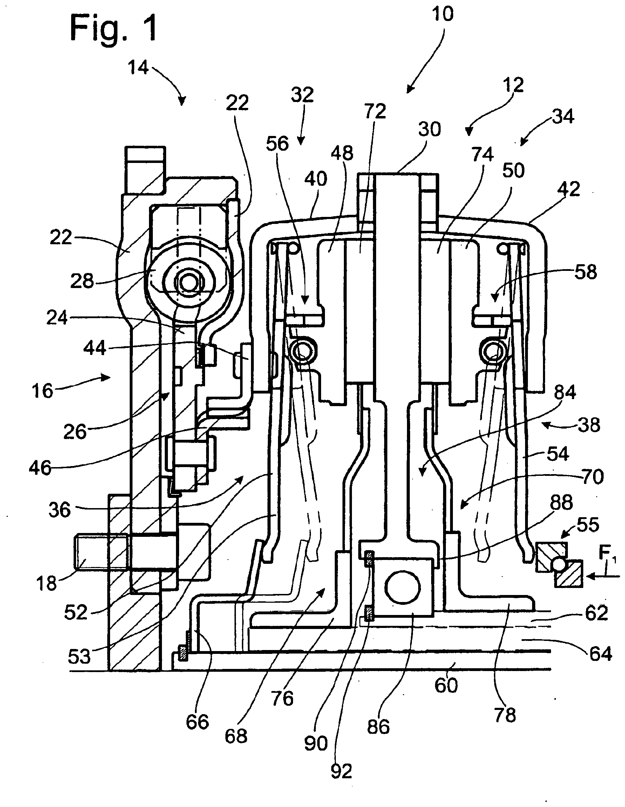

In Fig. 1 ist eine Drehmomentübertragungsanordnung allgemein mit 10 bezeichnet. Diese Drehmomentübertragungsanordnung umfasst zwei wesentliche Systembereiche. Einer davon ist eine Doppelkupplungsanordnung 12. Der andere dieser Systembereiche ist eine in Form eines Zweimassenschwungrads ausgestaltete Torsionsschwingungsdämpferanordnung 14. Diese ist mit einer Primärseite 16 ausgestaltet, die in einem radial inneren Bereich über eine Mehrzahl von Schraubbolzen 18 oder dergleichen an ein Antriebsorgan, beispielsweise eine Kurbelwelle einer Brennkraftmaschine, drehfest anzukoppeln ist. Die Primärseite 16 ist im Wesentlichen mit zwei Deckscheibenelementen 20, 22 aufgebaut, zwischen welche ein Zentralscheibenelement 24 einer Sekundärseite 26 der Torsionsschwingungsdämpferanordnung 14 eingreift. Zwischen der Primärseite 16 und der Sekundärseite 26 wirkt eine mehrere Dämpferfedern umfassende Dämpferelementenanordnung 28. Bei zu übertragenden Drehmomenten bzw. auftretenden Drehungleichförmigkeiten ermöglichen die Dämpferfedern der Dämpferelementenanordnung 28 eine Relativumfangsbewegung der Primärseite 16 bezüglich der Sekundärseite 26. Zusätzlich kann beispielsweise eine nicht weiter dargestellte Reibanordnung vorgesehen sein, so dass bei Auftreten von Drehungleichförmigkeiten auch Schwingungsenergie in definiertem Maße durch diese Reibung dissipiert werden kann. Es sei darauf hingewiesen, dass die Torsionsschwingungsdämpferanordnung 14 vorangehend nur mit Hinblick auf die wesentlichen konstruktiven Aspekte beschrieben wurde. Es ist selbstverständlich, dass diese in verschiedensten Aspekten variiert werden kann.

Die Doppelkupplungsanordnung 12 umfasst eine zentrale Widerlagerplatte 30 und an beiden axialen Seiten - axial bezogen auf eine Drehachse A des Gesamtsystems - davon jeweils einen Kupplungsbereich 32, 34. Die beiden Kupplungsbereiche 32, 34 sind vorzugsweise von im Wesentlichen gleichem Aufbau und lediglich seitenverkehrt an die zentrale Widerlagerplatte 30 angebunden. So umfasst jeder dieser Kupplungsbereiche 32, 34 eine Druckplattenbaugruppe 36 bzw. 38 mit einem im Wesentlichen topfartigen Gehäuse 40, 42. Radial außen sind diese beiden Gehäuse 40, 42 beispielsweise durch Schraubbolzen fest an die Widerlagerplatte 30 angebunden. An dem der Torsionsschwingungsdämpferanordnung 14 nahe liegend und somit an der einem Antriebsaggregat zugewandt und von einem Getriebe abgewandt liegenden Seite der Widerlagerplatte 30 vorgesehenen Gehäuse 40 ist ein beispielsweise ringartig ausgestaltetes Verzahnungselement 44 vorgesehen, welches mit einem entsprechenden Verzahnungselement 46 am Zentralscheibenelement 24 in Kämmeingriff steht oder bringbar ist. Auf diese Art und Weise ist eine drehfeste Kopplung zwischen der Doppelkupplungsanordnung 12 und der Torsionsschwingungsdämpferanordnung 14 bei gleichwohl ermöglichter Relativaxialbewegbarkeit realisiert.

Jeder der beiden Kupplungsbereiche 32, 34 bzw. jede der Druckplattenbaugruppen 36, 38 umfasst weiterhin eine Anpressplatte 48, 50. Diese Anpressplatten 48, 50 können beispielsweise über Tangentialblattfedern oder dergleichen mit dem zugehörigen Gehäuse 40 bzw. 42 oder der Widerlagerplatte 30 drehfest, jedoch axial beweglich gekoppelt sein. Die Kopplung mit den Gehäusen 40, 42 ist auf Grund des Bereitstellens der Druckplattenbaugruppen 36, 38 als vormontierte Baugruppen bevorzugt. Weiterhin weist jede der Druckplattenbaugruppen 36, 38 eine Kraftbeaufschlagungsanordnung 52 bzw. 54 auf. Diese können grundsätzlich nach Art einer Membranfeder aufgebaut sein und mit einer gewissen Vorspannung in die jeweilige Druckplattenbaugruppe 36 bzw. 38 integriert sein. Beide Kraftbeaufschlagungsanordnungen 52, 54 sind in ihrem radial äußeren Bereich bezüglich des jeweils zugeordneten Gehäuses 40, 42 axial abgestützt und können in einem radial weiter innen liegenden Bereich beispielsweise über eine jeweilige Verschleißkompensationsanordnung 56, 58 die zugehörige Anpressplatte 48, 50 beaufschlagen. Da bei einer derartigen Doppelkupplungsanordnung 12 im Allgemeinen nur über einen der Kupplungsbereiche 32, 34 ein Drehmoment zu übertragen ist, während der andere Kupplungsbereich in einem Ausrückzustand sein sollte, ist es vorteilhaft, die beiden Kupplungsbereiche 32, 34 als so genannte Normal-Offen-Kupplungen auszugestalten. Dies kann dadurch realisiert werden, dass die beiden Kraftbeaufschlagungsanordnungen 52, 54 grundsätzlich in Ausrückrichtung vorgespannt sind, also in einer Richtung, in welcher sie die zugehörigen Anpressplatten 48, 50 freigeben. Zum Einrücken eines jeweiligen Kupplungsbereichs, also zum Beaufschlagen der Anpressplatten 48, 50 in Richtung auf die zentrale Widerlagerplatte 30 zu, kann dann radial innen über ein jeweils zugeordnetes Betätigungssystem an den Kraftbeaufschlagungsanordnungen 52, 54 angegriffen werden, um diese dort in Richtung auf die Widerlagerplatte 30 zuzubewegen und damit auch die Anpressplatten 48 bzw. 50 in der gleichen Richtung zu beaufschlagen.

In der Fig. 1 ist in Zuordnung zur Kraftbeaufschlagungsanordnung 52 des Kupplungsbereichs 30 von diesem Bestätigungssystem ein stangenartiges Betätigungselement 60 erkennbar, das in einer zentralen Öffnung der koaxial inneren von zwei zueinander koaxial liegenden Getriebeeingangswellen 62, 64 verläuft, dargestellt. Das Betätigungselement 60 ist an seinem in Fig. 1 erkennbaren Ende mit einem topfartigen Übertragungselement 66 fest verbunden, das bei Bewegung des Bestätigungselements 60 in der Darstellung der Fig. 1 nach rechts, also in die koaxial innere Abtriebswelle bzw. Getriebeeingangswelle 64 hinein, den radial inneren Bereich der Kraftbeaufschlagungsanordnung 52 beaufschlagt und damit auch die Anpressplatte 48 in Richtung auf die Widerlagerplatte 30 zu bewegt. Die Kraftbeaufschlagungsanordnung 54 der in der Darstellung der Fig. 1 rechts, also getriebezugewandt zu positionierenden Druckplattenbaugruppe 38, wird zur Durchführung von Einrückvorgängen über ein Drehentkopplungslager 55 und ein lediglich durch einen Kraftpfeil F₁ dargestelltes Betätigungssystem beaufschlagt.

Jeder Kupplungsbereich 32, 34 weist in Zuordnung zur jeweiligen Druckplattenbaugruppe 36, 38 weiterhin eine Kupplungsscheibe 68, 70 auf. Jede Kupplungsscheibe weist einen radial äußeren Reibbereich 72, 74 auf, der jeweils zwischen der zentralen Widerlagerplatte 30 und der zugehörigen Anpressplatte 48 oder 50 liegt und mithin dazwischen einspannbar ist. Radial innen weisen die Kupplungsscheiben 68, 70 jeweils einen Nabenbereich 76, 78 auf. Der Nabenbereich 76 der Kupplungsscheibe 68 ist auf der koaxial inneren Abtriebswelle bzw. Getriebeeingangswelle 64 abgestützt und, wie allgemein üblich, mit einer Verzahnung versehen, die mit einer entsprechenden Verzahnung am axialen Ende der Abtriebswelle 64 in Kämmeingriff steht und somit eine drehfeste Kopplung zwischen der Kupplungsscheibe 68 und dieser Abtriebswelle 64 realisiert, bei gleichwohl ermöglichter Relativaxialbewegbarkeit. Der Nabenbereich 78 der Kupplungsscheibe 70 ist auf der koaxial äußeren Abtriebswelle über eine an diesem Nabenbereich 78 vorgesehene Verzahnung in Kämmeingriff mit einer entsprechenden Verzahnung an dieser koaxial äußeren Abtriebswelle 62.

Die zentrale Widerlagerplatte 30 weist radial innen einen Lagerungsbereich 84 auf. Dieser Lagerungsbereich umfasst ein mit der Widerlagerplatte 30 axial festgekoppeltes Drehentkopplungslager 86, das zwischen einem festen Axialbewegungsanschlag 88 an der Widerlagerplatte 30 und einem an der Widerlagerplatte 30 festzulegenden Sicherungsring 90 axial arretiert ist. Das Drehentkopplungslager 86 ist weiterhin an der koaxial äußeren Abtriebswelle 62 in radial definierter Positionierung abgestützt, so dass über diesen Lagerungsbereich 84, insbesondere das Drehentkopplungslager86 desselben die Widerlagerplatte 30 an der koaxial äußeren Abtriebswelle 62 gelagert ist. Ein weiterer Sicherungsring 92 sichert das Drehentkopplungslager 86 und mithin die gesamte Widerlagerplatte 30 in axialer Richtung an der koaxial äußeren Abtriebswelle 62.

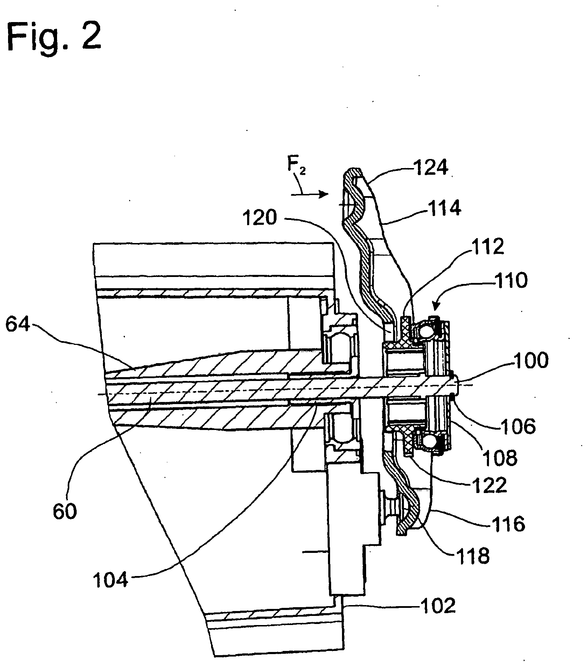

In Fig. 2 erkennt man das von der Doppelkupplungsanordnung 12 entfernt liegende Ende 100 des stangenartigen Betätigungselements 60, welches über die Rückseite eines allgemein mit 102 bezeichneten Getriebes bzw. Getriebegehäuses hinaussteht. Im Bereich dieses Endes 100 ist das stangenartige Betätigungselement 60 über ein hülsenartiges Lagerungselement 104 in der koaxial inneren Abtriebswelle bzw. Getriebeeingangswelle 64 gelagert. An dem Ende 100 ist über einen Sicherungsring 106 ein tellerartiges Übertragungselement 108 mit dem Betätigungselement 60 axial gekoppelt. An diesem Übertragungselement 108 ist ein Drehentkopplungslager 110 abgestützt, an welchem wiederum ein weiteres ringartiges Übertragungselement 112 axial abgestützt ist. In seinem radial inneren Bereich ist dieses Übertragungselement 112 auf dem stangenartigen Betätigungselement 60 abgestützt.

Ein Betätigungshebel 114 eines Betätigungssystems ist in einem Endbereich 116 an einem knopfartigen Lagerungselement 118 schwenkbar gelagert, welches Lagerungselement 118 wiederum am Getriebe 102 bzw. am Getriebegehäuse getragen ist. In einem mittleren Bereich weist der Betätigungshebel 114 eine Öffnung 120 auf, in welche das Übertragungselement 112 teilweise eingreift. Das Übertragungselement 112 weist einen nach radial außen greifenden Flanschbereich 122 auf, an welchem bei Durchführung einer Schwenkbewegung der Betätigungshebel 114 mit seinem die Öffnung 120 umgebenden Bereich zur Anlage kommt.

Wird der Betätigungshebel 114 in seinem zweiten Endbereich 124 mit einer Kraft F₂ beaufschlagt, beispielsweise durch einen axial verschiebbaren Stößel eines nicht weiter in seinen Einzelheiten dargestellten Betätigungssystems, verschwenkt er im Uhrzeigersinn und presst dabei das Betätigungselement 112 gegen das Drehentkopplungslager 110. Dieses wiederum presst über das Übertragungselement 108 gegen das stangenartige Betätigungselement 60, so dass dieses in der Darstellung der Fig. 1 und 2 nach rechts gezogen wird. Das stangenartige Betätigungselement 60 zieht dabei über das Übertragungselement 66 den radial inneren Endbereich 53 der Kraftbeaufschlagungsanordnung 52 in Richtung auf die zentrale Widerlagerplatte 30 zu, wodurch auch die Anpressplatte 48 in Richtung auf diese zentrale Widerlagerplatte 30 zu bewegt wird. Dabei wird der Reibbereich 72 der Kupplungsscheibe 68 zwischen der Anpressplatte 48 und der zentralen Widerlagerplatte 30 geklemmt und somit der Kupplungsbereich 32 in seinen Einrückzustand gebracht. Zum Ausrücken wird der Betätigungshebel 114 freigegeben bzw. die auf ihn einwirkende Kraft F₂ gemindert, so dass vor allem dann, wenn die Kraftbeaufschlagungsanordnung 52 mit einer in Richtung Ausrücken vorgespannten Einbaulage vorgesehen ist, durch die Rückstellwirkung der Kraftbeaufschlagungsanordnung 52 über das Übertragungselement 66 das stangenartige Betätigungselement 60 wieder in den Darstellungen der Fig. 1 und 2 nach links gezogen wird und der Kupplungsbereich 32 in seinen Ausrückzustand gelangen kann.

Man erkennt also, dass bei Durchführung von Betätigungsvorgängen das stangenartige Betätigungselement 60 einer ziehenden Belastung unterliegt und somit die Gefahr, dass dieses bei Übertragung sehr großer Betätigungskräfte gestaucht wird und Ausweichbewegungen durchführt, ausgeschlossen werden kann. Dies gestattet es, vergleichsweise große Betätigungskräfte auch über längere Zeitdauern hinweg zu übertragen, was bei Einsatz einer derartigen Kupplung des Normal-Offen-Typs von elementarem Vorteil ist, insbesondere wenn diese in einem Nutzfahrzeug eingesetzt wird, bei welchem große Drehmomente zu übertragen sind und mithin entsprechend große Betätigungskräfte erforderlich sind.

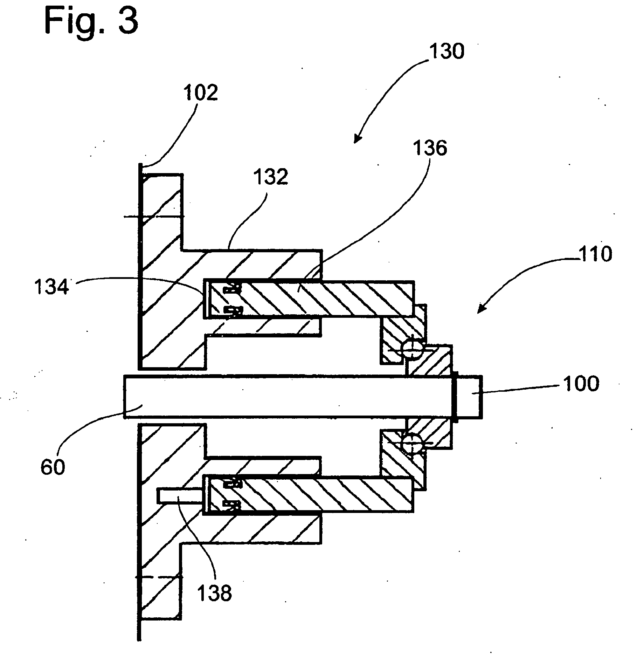

In Fig. 3 ist eine Alternative dargestellt, bei welcher am Ende 100 des stangenartigen Betätigungselements 60 eine Kolben/Zylinder-Anordnung 130 angreift, um zur Durchführung eines Betätigungsvorgangs an diesem stangenartigen Betätigungselement 100 zu ziehen. Ein Zylinderelement 132 dieser Kolben/Zylinder-Anordnung 130 ist am rückwärtigen Ende des Getriebes 102 abgestützt bzw. festgelegt und weist eine beispielsweise ringartige Zylinderkammer 134 auf. In dieser ist ein entsprechend ringartiger Kolben 136 in Längsrichtung des stangenartigen Betätigungselements 100 verschiebbar geführt. Über eine Fluidzuführöffnung 138 kann Druckfluid in die Zylinderkammer 134 eingeleitet werden, um somit zur Durchführung eines Betätigungsvorgangs den Kolben 136 in Richtung aus der Zylinderkammer 134 hinaus zu pressen und somit über das Drehentkopplungslager 110 das stangenartige Betätigungselement 60 zu ziehen.

Es sei darauf hingewiesen, dass selbstverständlich anstelle des zwischen dem Betätigungssystem, also beispielsweise der Kolben/Zylinder-Anordnung 130 oder dem Betätigungshebel 114 und dem stangenartigen Betätigungselement 60 wirkenden Drehentkopplungslager 110 auch eine Drehentkopplung zwischen dem stangenartigen Betätigungselement 60 und dem Übertragungselement 66 realisiert sein kann.

Ein weiterer Aspekt der vorliegenden Erfindung liegt darin, dass, wie in den Figuren deutlich erkennbar, die beiden Kupplungsbereiche 32, 34 bzw. deren Druckplattenbaugruppen 36, 38 zueinander im Wesentlichen baugleich ausgestaltet sein können. Sie werden lediglich in entgegengesetzter Art und Weise an den beiden Seiten der zentralen Widerlagerplatte 30 festgelegt. An dem Gehäuse 40 der der Torsionsschwingungsdämpferanordnung 30 zugewandten Druckplattenbaugruppe kann dann weiterhin das ringartige Element 44 festgelegt werden. Ansonsten können die beiden Druckplattenbaugruppen 36, 38 jedoch im Wesentlichen baugleich bzw. identisch sein, was zu einem deutlich kostengünstigeren Aufbau aufgrund einer geringeren Teilevielfalt führt. Ungeachtet der Tatsache, dass vor allem auch bei derartiger im Wesentlichen identischer Ausgestaltung der beiden Druckplattenbaugruppen die Kombination mit dem vorangehend beschriebenen Aspekt des ziehenden Belastens des stangenartigen Betätigungselements 60 von besonderem Vorteil ist, ist darauf hinzuweisen, dass selbstverständlich diese baugleiche Ausgestaltung der beiden Druckplattenbaugruppen 36, 38 auch dann von besonderem Vorteil ist, wenn die Betätigung in anderer Art und Weise erfolgt. Bispielsweise könnten die beiden Druckplattenbaugruppen auch von dem Normal-Geschlossen-Typ sein, können gezogen oder gedrückt sein und dann mit entsprechenden Betätigungssystemen zusammenwirken. Auch ist es selbstverständlich möglich, dass beide Druckplattenbaugruppen 36, 38 bzw. deren Gehäuse 40, 42 mit Bohrungen zur Festlegung des ringartigen Elements 44 ausgestaltet sein können, wobei dann selbstverständlich nur bei der getriebeabgewandt zu positionierenden Druckplattenbaugruppe entsprechende Maßnahmen zur Festlegung eines derartigen Bauteils getroffen werden.

## Patentansprüche

1. Drehmomentübertragungsanordnung für den Antriebsstrang eines Fahrzeugs, umfassend eine Doppelkupplungsanordnung (12) mit einer zentralen Widerlagerplatte (30), welche an ein Antriebsorgan angekoppelt oder anzukoppeln ist, und an beiden axialen Seiten der Widerlagerplatte (30) jeweils eine Druckplattenbaugruppe (36, 38), wobei jede Druckplattenbaugruppe (36, 38) ein an der Widerlagerplatte (30) festgelegtes oder festzulegendes Gehäuse (40, 42), eine bezüglich des Gehäuses (40, 42) im Wesentlichen drehfest und axial bewegbar gehaltene Anpressplatte (48, 50) sowie eine bezüglich der Anpressplatte (48, 50) und des Gehäuses (40, 42) abgestützte Kraftbeaufschlagungsanordnung (52, 54) umfasst, ferner umfassend in Zuordnung zu jeder Druckplattenbaugruppe (36, 38) eine an ein Abtriebsorgan (64, 62) angekoppelte oder anzukoppelnde Kupplungsscheibe (68, 70), welche bei Beaufschlagung der Anpressplatte (48, 50) durch die Kraftbeaufschlagungsanordnung (52, 54) gegen die Widerlagerplatte (30) pressbar ist, wobei die Abtriebsorgane (64, 62) zwei koaxial zueinander angeordnete Abtriebswellen (64, 62) umfassen und wobei in der koaxial inneren Abtriebswelle (64) ein stangenartiges Betätigungsorgan (60) angeordnet ist, über welches eine Betätigungskraft auf die Kraftbeaufschlagungsanordnung (52) derjenigen Druckplattenbaugruppe (36) übertragbar ist, deren zugeordnete Kupplungsscheibe (68) mit der koaxial inneren Abtriebswelle (64) gekoppelt oder zu koppeln ist, wobei das stangenartige Betätigungsorgan (60) an seinem von der Zusammenwirkung mit der Kraftbeaufschlagungsanordnung (52) entfernt liegenden Betätigungsende (100) zur Einleitung einer Betätigungskraft mit einem Betätigungssystem zusammenwirkt, wobei das stangenartige Betätigungsorgan (60) bei Übertragung einer Betätigungskraft vom Betätigungssystem zu der Kraftbeaufschlagungsanordnung (52) einer Zugbelastung unterliegt,
**dadurch gekennzeichnet, dass** die zentrale Widerlagerplatte (30) einen radial innen liegenden Lagerungsbereich (84) aufweist, in welchem diese bezüglich der koaxial äußeren Welle (62) gelagert ist,
wobei die Drehmomentübertragungsanordnung eine Torsionsschwingungsdämpferanordnung (14) aufweist, wobei an dem der Torsionsschwingungsdämpferanordnung (14) nahe liegend und somit an der einem Antriebsaggregat zugewandt und von einem Getriebe abgewandt liegenden Seite der Widerlagerplatte (30) vorgesehenen Gehäuse (40) ein ringartig ausgestaltetes Verzahnungselement (44) vorgesehen ist, welches mit einem entsprechenden Verzahnungselement (46) an einem Zentralscheibenelement (24) der Torsionsschwingungsdämpferanordnung (14) in Kämmeingriff steht oder bringbar ist.

2. Drehmomentübertragungsanordnung nach Anspruch 1, **dadurch gekennzeichnet, dass** das Betätigungssystem die Betätigungskraft am Betätigungsende (100) über ein Drehentkopplungslager (110) in das stangenartige Betätigungsorgan (60) einleitet.

3. Drehmomentübertragungsanordnung nach Anspruch 1, **dadurch gekennzeichnet, dass** im Betätigungskraftübertragungsweg zwischen dem stangenartigen Betätigungsorgan (60) und der Kraftbeaufschlagungsanordnung (52) ein Drehentkopplungslager angeordnet ist.

4. Drehmomentübertragungsanordnung nach einem der vorhergehenden Ansprüche, **dadurch gekennzeichnet, dass** das Betätigungssystem einen Betätigungshebel (114) umfasst, der in einem ersten Abstützbereich (116) bezüglich einer im Wesentlichen feststehenden Baugruppe (102) abgestützt ist und in einem zweiten Abstützbereich eine Betätigungskraft in das stangenartige Betätigungsorgan (60) einleitet.

5. Drehmomentübertragungsanordnung nach einem der Ansprüche 1 bis 3, **dadurch gekennzeichnet, dass** das Betätigungssystem eine das stangenartige Betätigungsorgan (60) im Wesentlichen koaxial umgebende Kolben/Zylinder-Baugruppe (130) umfasst, die bezüglich einer im Wesentlichen feststehenden Baugruppe (102) abgestützt ist und zur Einleitung einer Betätigungskraft das stangenartige Betätigungselement (60) beaufschlagt.

6. Drehmomentübertragungsanordnung nach einem der vorhergehenden Ansprüche, **dadurch gekennzeichnet, dass** die zentrale Widerlagerplatte (30) mit ihrem Lagerungsbereich (84) bezüglich der koaxial äußeren Welle (62) axial im Wesentlichen feststehend gehaltert ist.

7. Drehmomentübertragungsanordnung nach Anspruch 1, **dadurch gekennzeichnet, dass** die an den beiden Seiten der zentralen Widerlagerplatte vorgesehenen Druckplattenbaugruppen (36, 38) zueinander im Wesentlichen baugleich sind.

## Claims

1. Torque transmission arrangement for the drive train of a vehicle, comprising a double clutch arrangement (12) with a central abutment plate (30) which is coupled or can be coupled to a drive element, and further comprising in each case one pressure-plate assembly (36, 38) on both axial sides of the abutment plate (30), each pressure-plate assembly (36, 38) comprising a housing (40, 42) which is fixed or can be fixed on the abutment plate (30), a pressure plate (48, 50) which is held in a substantially rotationally fixed and axially movable manner with regard to the housing (40, 42), and a force-loading arrangement (52, 54) which is supported with regard to the pressure plate (48, 50) and the housing (40, 42), further comprising, in association with each pressure-plate assembly (36, 38), a clutch plate (68, 70) which is coupled or can be coupled to an output element (64, 62) and can be pressed against the abutment plate (30) when the pressure plate (48, 50) is loaded by the force-loading arrangement (52, 54), the output elements (64, 62) comprising two output shafts (64, 62) which are arranged coaxially with respect to one another, and a rod-like actuating element (60) being arranged in the coaxially inner output shaft (64), via which rod-like actuating element (60) an actuating force can be transmitted to the force-loading arrangement (52) of that pressure-plate assembly (36), the associated clutch plate (68) of which is coupled or can be coupled to the coaxially inner output shaft (64), the rod-like actuating element (60) interacting, at its actuating end (100) which lies remote from the interaction with the force-loading arrangement (52), with an actuating system in order to introduce an actuating force, wherein the rod-like actuating element (60) is subjected to a tensile load when transmitting an actuating force from the actuating system to the force-loading arrangement (52),
**characterized in that** the central abutment plate (30) has a mounting region (84) which lies radially on the inside and in which it is mounted with regard to the coaxially outer shaft (62),
wherein the torque transmission arrangement comprises a torsional vibration damper arrangement (14), wherein at the housing provided close to the torsional vibration damper arrangement (14) at the side of the abutment plate (30) facing a drive assembly and facing away from a transmission unit a ring-type toothing element (44) is provided which is or may be brought into comb-type engagement with a corresponding toothing element (46) at a central disk element (24) of the torsional vibration damper arrangement (14).

2. Torque transmission arrangement according to Claim 1, **characterized in that** the actuating system introduces the actuating force at the actuating end (100) via a rotational release bearing (110) into the rod-like actuating element (60).

3. Torque transmission arrangement according to Claim 1, **characterized in that** a rotational release bearing is arranged in the actuating-force transmission path between the rod-like actuating element (60) and the force-loading arrangement (52).

4. Torque transmission arrangement according to one of the preceding claims, **characterized in that** the actuating system comprises an actuating lever (114) which is supported with regard to a substantially fixed assembly (102) in a first supporting region (116) and introduces an actuating force into the rod-like actuating element (60) in a second supporting region.

5. Torque transmission arrangement according to one of Claims 1 to 3, **characterized in that** the actuating system comprises a piston/cylinder assembly (130) which surrounds the rod-like actuating element (60) substantially coaxially, is supported with regard to a substantially fixed assembly (102) and loads the rod-like actuating element (60) in order to introduce an actuating force.

6. Torque transmission arrangement according to one of the preceding claims, **characterized in that** the central abutment plate (30) is secured with its mounting region (84) in an axially substantially fixed manner with regard to the coaxially outer shaft (62).

7. Torque transmission arrangement according to Claim 1, **characterized in that** the pressure-plate assemblies (36, 38) which are provided on the two sides of the central abutment plate are substantially structurally identical with respect to one another.

## Revendications

1. Agencement de transfert de couple pour la chaîne cinématique d'un véhicule, comprenant un agencement de double embrayage (12) avec un plateau de butée central (30), qui est accouplé ou peut être accouplé à un organe d'entraînement, et, des deux côtés axiaux du plateau de butée (30), à chaque fois un module de plateau de pression (36, 38), chaque module de plateau de pression (36, 38) comprenant un boîtier (40, 42) fixé ou pouvant être fixé sur le plateau de butée (30), un plateau de pressage (48, 50) maintenu essentiellement de manière solidaire en rotation et déplaçable axialement par rapport au boîtier (40, 42) ainsi qu'un agencement de sollicitation de force (52, 54) supporté par rapport au plateau de pressage (48, 50) et au boîtier (40, 42), comprenant en outre en association avec chaque module de plateau de pression (36, 38), un disque d'embrayage (68, 70) accouplé ou pouvant être accouplé à un organe de prise de force (64, 62), lequel peut être pressé lors de la sollicitation du plateau de pressage (48, 50) par l'agencement de sollicitation de force (52, 54) contre le plateau de butée (30), les organes de prise de force (64, 62) comprenant deux arbres de prise de force (64, 62) disposés coaxialement l'un par rapport à l'autre et un organe d'actionnement (60) en forme de barre étant disposé dans l'arbre de prise de force coaxialement interne (64), par le biais duquel une force d'actionnement peut être transmise à l'agencement de sollicitation de force (52) du module de plateau de pression concerné (36), dont le disque d'embrayage associé (68) est accouplé ou peut être accouplé à l'arbre de prise de force coaxialement interne (64), l'organe d'actionnement (60) en forme de barre coopérant avec un système d'actionnement au niveau de son extrémité d'actionnement (100) éloignée de la coopération avec l'agencement de sollicitation de force (52) en vue d'introduire une force d'actionnement, l'organe d'actionnement (60) en forme de barre, lors du transfert d'une force d'actionnement du système d'actionnement à l'agencement de sollicitation de force (52), étant soumis à une contrainte de traction,
**caractérisé en ce que** le plateau de butée central (30) présente une région de support sur palier (84) située radialement à l'intérieur, dans laquelle celui-ci est supporté par rapport à l'arbre coaxialement extérieur (62),
l'agencement de transfert de couple présentant un agencement d'amortisseur d'oscillations de torsion (14), un élément de denture (44) configuré sous forme annulaire étant prévu au niveau du boîtier (40) situé à côté de l'agencement d'amortisseur d'oscillations de torsion (14) et donc prévu sur le côté de la plaque de butée (30) tourné vers un groupe motopropulseur et opposé à une transmission, lequel élément de denture est ou peut être amené en engagement d'engrènement avec un élément de denture correspondant (46) au niveau d'un élément de disque central (24) de l'agencement d'amortisseur d'oscillations de torsion (14).

2. Agencement de transfert de couple selon la revendication 1, **caractérisé en ce que** le système d'actionnement introduit la force d'actionnement sur l'extrémité d'actionnement (100) par le biais d'un palier de désaccouplement en rotation (110) dans l'organe d'actionnement (60) en forme de barre.

3. Agencement de transfert de couple selon la revendication 1, **caractérisé en ce qu'**un palier de désaccouplement en rotation est disposé dans la voie de transfert de force d'actionnement entre l'organe d'actionnement (60) en forme de barre et l'agencement de sollicitation de force (52).

4. Agencement de transfert de couple selon l'une quelconque des revendications précédentes, **caractérisé en ce que** le système d'actionnement comprend un levier d'actionnement (114) qui est supporté dans une première région de support (116) par rapport à un module (102) essentiellement fixe, et qui, dans une deuxième région de support, introduit une force d'actionnement dans l'organe d'actionnement (60) en forme de barre.

5. Agencement de transfert de couple selon l'une quelconque des revendications 1 à 3, **caractérisé en ce que** le système d'actionnement comprend un module piston/cylindre (130) entourant essentiellement coaxialement l'organe d'actionnement (60) en forme de barre, qui est supporté par rapport à un module essentiellement fixe (102) et qui sollicite l'élément d'actionnement (60) en forme de barre pour introduire une force d'actionnement.

6. Agencement de transfert de couple selon l'une quelconque des revendications précédentes, **caractérisé en ce que** le plateau de butée central (30) est maintenu de manière essentiellement fixe axialement avec sa région de support sur palier (84) par rapport à l'arbre coaxialement extérieur (62) .

7. Agencement de transfert de couple selon la revendication 1, **caractérisé en ce que** les modules de plateau de pression (36, 38) prévus des deux côtés du plateau de butée central sont essentiellement de même construction l'un par rapport à l'autre.
